# EUROPÄISCHE PATENTSCHRIFT

(11) **EP 0 515 801 B1**
(45) Veröffentlichungstag und Bekanntmachung des Hinweises auf die Patenterteilung: **26.07.1995**
(21) Anmeldenummer: 92105754.3
(22) Anmeldetag: 03.04.1992
(51) Int. Cl.: C09D 183/08, C08K 9/06, C08J 5/08, C08K 5/54

(54) **Haftvermittler**
Adhesive promoter
Promoteur d'adhésion

(30) Priorität: 26.04.1991 DE 4113655
(43) Veröffentlichungstag der Anmeldung: 02.12.1992
(73) Patentinhaber: BASF Lacke + Farben AG, 48165 Münster-Hiltrup (DE)
(72) Erfinder: Blum, Rainer, W-6700 Ludwigshafen (DE); Heller, Hans Joachim, Dr., W-2000 Hamburg 55 (DE); Haehnle, Hans-Joachim, Dr., W-6700 Ludwigshafen (DE); Lienert, Klaus, Dr., W-2000 Hamburg 50 (DE)
(74) Vertreter: Langfinger, Klaus-Dieter, Dr.

(56) Entgegenhaltungen:
- DE-A- 3 623 759
- US-A- 4 055 701
- US-A- 4 447 495
- Datenbank JAPS / JPO JP A 3012346 (Nitto Boseki Co Ltd) 21/1 1991

## Beschreibung

Die Erfindung betrifft die Verwendung eines Gemisches aus
5 bis 95 Gew.-% eines Azidosilans der allgemeinen Formel

N₃-R³-Si-R¹ₙ(OR²)₃₋ₙ I

worin R¹ für eine C₁-C₃-Alkyl-, eine Phenyl-, Benzyl- oder Toluylgruppe, R² für eine C₁-C₄-Alkyl-, C₂-C₄-Alkoxyalkyl-, eine Phenyl- oder Benzylgruppe, R³ für eine C₁-C₈-Alkylengruppe, welche durch ein Sauerstoffatom, Schwefelatom oder eine -(N-R⁴)-Gruppe, worin R⁴ ein Wasserstoff, eine Methyl-, Ethyl- oder Phenylgruppe bedeutet, unterbrochen sein kann, und n für 0, 1 oder 2 steht, und
5 bis 95 Gew.-% eines Aminoalkoxysilans der allgemeinen Formel

H₂N-R⁵-Si-R⁶ₘ(OR⁷)₃₋ₘ (II)

worin R⁵ für eine C₁-C₆-Alkylen-, eine C₅-C₆-Cycloalkylen- oder -Arylengruppe, welche zusätzlich durch ein oder zwei C₁-C₃-Alkylgruppen substituiert sein können und R⁶ und R⁷ unabhängig voneinander für eine C₁-C₆-Alkyl- oder eine C₅-C₆-Cycloalkylgruppe, welche ebenfalls zusätzlich durch ein oder zwei C₁-C₃-Alkylgruppen substituiert sein können, stehen und m = 0, 1 oder 2 sein kann,
als Haftvermittler zwischen Polykondensaten, welche als Struktureinheiten heterocyclische Ringsysteme mit N-Atomen aufweisen oder Vorstufen dieser Polykondensate und anorganischen Substraten.

Polykondensate, welche als Struktureinheiten heterocyclische Ringsysteme mit N-Atomen aufweisen, z.B. Polyimide, werden in zunehmendem Maße für Beschichtungen von Metalldrähten, Glas- und Quarzfasern, sowie Substraten aus Silicium, gegebenenfalls mit modifizierten Oberflächen aus Siliciumdioxid-, bzw. -nitrid eingesetzt, da die Anforderungen an die Temperaturbeständigkeit solcher Beschichtungen z.B. in der Elektronik und Mikroelektronik ständig gestiegen sind.

Um eine ausreichende Haftung von solcher Beschichtungen zu gewährleisten, müssen die anorganischen Substrate mit sog. Haftvermittlern vorbehandelt werden. Als Haftvermittler werden üblicherweise Aminoalkoxysilane eingegen setzt, die in Form ihrer verdünnten alkoholischen oder alkoholische/wäßrigen Lösungen auf das anorganische Substrat aufgebracht werden.

Nach Entfernung des Lösungsmittels wird in einem weiteren Arbeitsschritt die Beschichtung, wie Polyimid bzw. dessen lösliche Vorstufen aufgetragen.

Neben Aminoalkoxysilanen sind auch Azidosilane als Haftvermittler von Interesse.

In der US-A-3 705 911 werden Silyl-azidoformate beschrieben, die zur Verbesserung der Haftung von Polymeren auf anorganischen Substraten eingesetzt werden.

Aus der GB-B-1 377 214 und GB-B-1 516 193 sind ähnliche Azidoformate als Haftvermittler bekannt.

Gegenstand der EP-B-507 768 ist ein Verfahren zur Herstellung von Azidosilanen der allgemeinen Formel

N₃-R³-Si-R¹ₙ(OR²)₃₋ₙ,

wobei die Reste R¹ bis R³ die oben genannte Bedeutung haben und z.B. für kurzkettige Alkyl- bzw. Alkylenreste stehen können.

Aus der älteren nicht vorveröffentlichten deutschen Patentanmeldung P 4107664.8 sind Lösungen enthaltend Polykondensate mit N-enthaltenden heterocyclischen Ringsystemen und Azidosilane als Haftvermittler bekannt.

Die bisher bekannten Haftvermittler bewirken für viele Polyimide noch keine ausreichende Haftung.

Aufgabe der vorliegenden Erfindung war es daher, Haftvermittler zu Verfügung zu stellen, welche allgemein bei Polyimiden eine gute Haftung bewirken.

Demgemäß wurde die oben beschriebene Verwendung gefunden.

Weitere Ausprägungen der Erfindung sind den Unteransprüchen zu entnehmen.

Das Gemisch für die Verbesserung der Haftung von Polykondensaten, welche als Struktureinheiten heterocyclische Ringsysteme mit N-Atomen aufweisen, enthält
- 5 bis 95 Gew.-%,: insbesondere 20 bis 80 Gew.-%, besonders bevorzugt 30 bis 70 Gew.-% eines Azidosilans der allgemeinen Formel I und
- 5 bis 95 Gew.-%,: insbesondere 20 bis 80 Gew.-%, besonders bevorzugt 30 bis 70 Gew.-% eines Aminoalkoxysilans der allgemeinen Formel II.

Bevorzugt enthält das Gemisch aliphatische Azidosilane, besonders bevorzugt solche, in denen R² für eine C₁-C₄-Alkylgruppe, R³ für eine C₁-C₆-Alkylengruppe steht und n = 0 ist. Ganz besonders bevorzugt ist 3-Azidopropyltriethoxysilan.

Bevorzugte Aminoalkoxysilane enthalten als Rest R⁵ eine C₁-C₆-Alkylengruppe und als Rest R⁷ eine C₁-C₆-Alkylgruppe, wobei m = 0 ist.

In Betracht kommende Polykondensate sind z.B. Polybenzimidazole, Polybenzthiazole, Polybenzoxazole, Polyoxazindione, Polychinazolindione, Polyisoindolochinazolindione. Verfahren zur Herstellung dieser Polykondensate sind z.B. aus der DE-A-29 33 826 und der DE-A-23 11 659 zu entnehmen.

Bei den Polyoxazindionen handelt es sich um Polykondensate mit sich wiederholenden Struktureinheiten 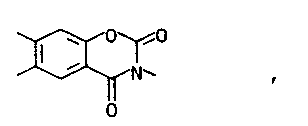
welche durch Umsetzung von Dihydroxydicarbonsäuren und Diisocyanaten erhältlich sind.

Die Polychinazolindione enthalten wiederkehrende Struktureinheiten 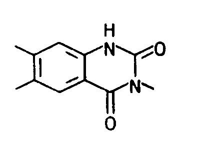
und sind durch Umsetzung von Diaminodicarbonsäuren und Diisocyanaten erhältlich.

Die Polyisoindolochinazolindione weisen wiederkehrende Struktureinheiten 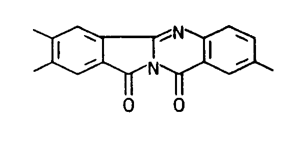
auf und sind durch Umsetzung von Tetracarbonsäuredianhydriden mit o-Aminoamiden erhältlich.

Wiederkehrende Struktureinheiten in den Polybenzoxazolen (-thiazolen) sind 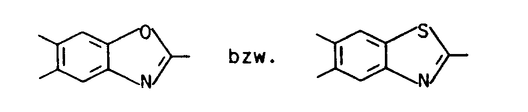
Die Polybenzoxazole (-thiazole) können z.B. durch Umsetzung von Dicarbonsäuren mit Di-o-Aminophenolen bzw. -thiophenolen erhalten werden.

Die Polybenzimidazole weisen wiederkehrende Struktureinheiten 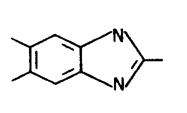
auf und entstehen bei der Umsetzung von Di-(o-diaminen) mit Dicarbonsäuren.

Bevorzugte Polykondensate mit H-enthaltenden heterocyclischen Ringsystemen sind Polyimide mit wiederkehrenden Struktureinheiten 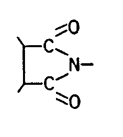
welche z.B. durch Umsetzung von Tetracarbonsäuredianhydriden mit Diaminen oder Diisocyanaten erhältlich sind.

Bevorzugt sind ebenfalls Vorstufen der Polyimide. Bei diesen Vorstufen handelt es sich um Polyamidsäuren mit wiederkehrenden Struktureinheiten 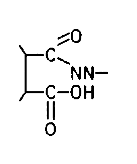
bei denen der Ringschluß zum Polyimid noch nicht vollzogen ist.

Besonders geeignete Tetracarbonsäuredianhydride, aus denen Polyimide bzw. Polyamidsäuren erhältlich sind, sind solche mit insgesamt 8 bis 20 C-Atomen bei aliphatischen und 10 bis 20 C-Atomen bei aromatischen Tetracarbonsäuredianhydriden. Bevorzugt sind Dianhydride von aromatischen Tetracarbonsäuren, insbesondere von Pyromellitsäure, 3,3',4,4'-Diphenyltetracarbonsäure, 2,2'4,4'-Diphenyltetracarbonsäure, Di(dicarboxyldiphenyl)methan, Di(dicaraboxydihydroxyphenyl)methane oder Benzophenontetracarbonsäure.

Besonders geeignete Diaminoverbindungen, aus denen Polyimide bzw. Polyamidsäuren erhältlich sind, weisen insgesamt 2 bis 20 C-Atome bei aliphatischen und 6 bis 20 C-Atome bei aromatischen Diaminoverbindungen auf. Bevorzugt sind aromatische Diaminoverbindungen, insbesondere 4,4'-Diaminodiphenyloxid, 3,3'-Dimethylbenzidin, 3,3'-Dimethoxibenzidin, 4,4'-Diaminobenzophenon, 4,4'-Diaminobiphenyl und 4,4'-Isopropylendianilin, Diaminotoluole, 4,4'-Diaminodiphenylmethan, 4,4'-Diaminodiphenylsulfon und 2,2-Bis(4-aminophenoxy)phenylpropan.

Bei geeigneten bzw. bevorzugten Diisocyanaten für die Herstellung von Polyimiden handelt es sich bevorzugt um den Diaminen entsprechende Diisocyanate, welche statt der Aminogruppen Isocyanatgruppen enthalten. Es kommen auch Diisocyanate in Betracht, die neben den Isocyanatgruppen noch Aminogruppen enthalten, z.B. 9,9-Bis(4-aminophenyl)fluorendiisocyanat.

Die Polykondensate oder ihre Vorstufen können auch ethylenisch ungesättigte Gruppen enthalten, so daß eine Aushärtung der Beschichtungen auch photochemisch erfolgen kann. Zum Beispiel können ungesättigte Alkohole wie Allylalkohol mit Tetracarbonsäuredianhydriden umgesetzt werden, um so ungesättigte Gruppen an das Polymer zu binden.

Insbesondere hat sich in diesem Fall ein Gehalt von 0,01 bis 2 Mol, bevorzugt 0,05 bis 1,5 Mol ethylenisch ungesättigter Gruppen, bezogen auf 500 g Polykondensat bzw. dessen Vorstufen, als geeignet erwiesen.

Eine andere Möglichkeit, die Polykondensate bzw. ihre Vorstufen strahlen-vernetzbar zu machen, ist der Einbau von Benzophenon bzw. dessen Derivate in das Polymergerüst. Der Gehalt dieser Carbonylverbindungen beträgt im Falle einer gewünschten photochemischen Vernetzung ebenfalls 0,01 bis 2 Mol, bevorzugt 0,05 bis 1,5 Mol, bezogen auf 500 g Polykondensat bzw. dessen Vorstufen.

Zur Verbesserung der Haftung der Polykondensate oder ihrer Vorstufen auf unterschiedlichsten Substraten kann zunächst das Gemisch aus Azidosilanen und Aminoalkoxysilanen auf die Oberfläche der Substrate aufgebracht werden. Die Azidosilane und Aminoalkoxysilane können geeigneterweise in einer alkoholischen Lösung, welche geringe Mengen Wasser enthalten kann, gelöst werden. Als Alkohol kommt insbesondere ein C₁-C₈-Alkanol, z.B. Ethanol oder iso-Propylalkohol in Betracht. Der Wasseranteil im Lösungsmittel beträgt bevorzugt 0,5 bis 10 Gew.-%. Die Lösungen sollten erst kurz vor der weiteren Verwendung hergestellt werden, da sonst nach einer zumindest teilweisen Hydrolyse der Alkoxygruppen höher kondensierte Siliciumderivate entstehen können.

Es ist jedoch auch möglich, die erfindungsgemäßen Mischungen in einem nicht hydrolisierenden Lösemittel, z.B. Kohlenwasserstoffen oder Ketonen zu lösen und auf die Substrate aufzubringen. In diesen Fällen empfiehlt es sich, die mit Haftungsvermittler beschichteten Substrate vor dem Auftragen der Polykondensate einige Zeit der Luft auszusetzen, um durch die Luftfeuchtigkeit eine zumindest teilweise Hydrolyse der Alkoxygruppen zu bewirken.

Die Menge des Haftvermittlers wird im allgemeinen so gewählt, daß auf die Substratoberfläche eine Schicht mit einer Dicke von wenigen Moleküllängen aufgebracht ist. Im allgemeinen ist, wie der Fachmann weiß, eine monomolekulare Schicht ausreichend. Das Azidosilan und Aminoalkoxysilan können zur Auftragung in getrennten Lösungen oder als Gemisch in einer Lösung vorliegen.

Bevorzugt werden 0,001 bis 0,1 gew.-%ige Lösungen des Azidosilans; Aminoalkoxysilans oder eines Gemisches der beiden eingesetzt, wobei bevorzugt 0,0005 bis 0,5 g der Lösungen pro Quadratzentimeter Substratoberfläche aufgebracht werden.

Nach Aufbringung und Verteilung der Lösungen auf der Substratoberfläche kann das Lösungsmittel bei erhöhter Temperatur abgedampft werden.

Danach kann das Polykondensat, welches geeigneterweise in einem organischen Lösungsmittel vorliegt, aufgetragen und das Lösungsmittel ebenfalls durch Temperaturerhöhung entfernt werden.

Als geeignete Lösungsmittel, insbesondere auch für Polyimide bzw. Polyamidsäuren, haben sich phenolische Lösungsmittel, z.B. Kresol und amidische Lösungsmittel, wie Dimethylformamid, Dimethylacetamid oder N-Methylpyrrolidon erwiesen.

Als Substrate eignen sich insbesondere anorganische Substrate, z.B. Metalle in Form von Metalldrähten, Glas- und Quarzfasern, sowie Silicium (Wafer). Besonders vorteilhaft ist die Haftung auf Substraten auf Basis von Silicium. Insbesondere kann auch auf oberflächenmodifiziertem Silicium (Siliciumdioxid- bzw. Siliciumnitridoberfläche durch Behandlung mit Sauerstoff bzw. Stickstoff) eine sehr gute Haftung der Beschichtung erreicht werden.

Wie die nachfolgenden Beispiele zeigen, können bei chemisch sehr unterschiedlichen Polyimiden bzw. Polyamidsäuren gleichermaßen gute Haftungsergebnisse erzielt werden.

### Beispiele

### Herstellung von Polyamidsäurelösungen (PAS)

In einem trockenen Dreihalsrührkolben wurden 0.25 Mol des unten aufgeführten aromatischen Diamins bei Raumtemperatur in N-Methylpyrrolidon (NMP) gelöst. Die NMP-Menge wurde so gewählt, daß die Polymerkonzentration im Gesamtansatz 20 % betrug.

Diese Lösung wurde unter einem leichten Strom von getrocknetem Stickstoff auf 50°C erwärmt, und dann in zehn ungefähr gleichen Portionen 0.25 Mol des unten aufgeführten aromatischen Dianhydrids in Abständen von 10 Minuten eingerührt. Es wurde eine Stunde bei 60°C weitergerührt und dann auf Raumntemperatur abgekühlt.

### PAS 1

- Diamin:: 4,4-Diaminodiphenylether
- Dianhydrid:: Pyromellithsäureanhydrid
- Lösungsviskosität der erhaltenen Lösung:: 6400 mPas (25°C).

### PAS 2

- Diamin:: 2.2-Bis(aminophenoxy)phenylpropan (BAPP)
- Dianhydrid:: Hexafluorisopropyliden-2.2-bisphthalsäuredianhydrid (6F-DA)
- Lösungsviskosität der erhaltenen Lösung:: 5940 mPas (25°C).

### PAS 3

- Diamin:: 4,4-Diaminodiphenylsulfon / BAPP (Molverhältnis 1 : 1)
- Dianhydrid:: Benzophenontetracarbonsäuredianhydrid
- Lösungsviskosität der erhaltenen Lösung:: 7280 mPas (25°C)

### Herstellung eines gelösten Polyimids (PI)

### PI 1

In einem trockenen Dreihalsrührkolben wurden 80.5 g Benzophenontetracarbonsäuredianhydrid in 282 g NMP bei Raumtemperatur suspendiert. Dazu wurden 22.25 g eines Toluylendiisocyanat-Isomerengemisches gegeben und unter einem leichten Strom von getrocknetem Stickstoff in 3 Stunden auf 160°C aufgeheizt. Es wurde eine braune ca. 25 %ige PI-Lösung erhalten, die Viskosität betrug 3870 mPas.

### Haftungsprüfung auf Siliciumscheiben (Wafern)

### Zunächst wurden folgende Haftvermittlerlösungen angesetzt.

- HV 1:: Aminopropyltriethoxysilan (AMPS)
0,03 gew.-%ig in
Ethanol/Wasser 9 : 1 (Gewichtsanteile)
- HV 2:: Azidopropyltriethoxysilan (AZPS)
0,03 gew.-%ig in
Ethanol/Wasser 9 : 1 (Gewichtsanteile)
- HV 3:: AMPS und AZPS im Gewichtsverhältnis 1 : 1
0,03 gew.-%ig in
Ethanol/Wasser 9 : 1 (Gewichtsteile).

Die Haftvermittlerlösungen wurden jeweils auf Siliciumscheiben (Wafern) aufgetragen. Die Verteilung des Haftvermittlers auf der Scheibe wird durch eine schnelle Rotation der Scheibe bewirkt. Anschließend wurden die Scheiben bei 100°C getrocknet.

Zur Auftragung der Polymerlösungen wurde dann in Vorversuchen die Drehzahl der Siliciumscheiben bestimmt, die notwendig ist, um Trockenschichtdicken von ca. 5 »m zu erhalten.

Auf die mit den Haftvermittlerlösungen vorbehandelten Wafer wurden bei den vorbestimmten Drehzahlen die Polymerlösungen aufgeschleudert und unter Vakuum nach folgendem Programm getrocknet: 90°C 20 Min., 150°C 30 Min., 200°C 30 Min. und 300°C 60 Min.

Die Prüflinge wurden 48 Std. bei Raumklima gelagert und dann auf Haftung geprüft.

Eine zweite Serie wurde ebenfalls 48 Std. bei Raumklima gelagert, dann aber noch 4 Std. in VE-Wasser gekocht. Sofort nach der Entnahme wurden die Prüflinge abgetrocknet und auf Haftung geprüft.

Die Haftungsprüfung erfolgte so, daß die Polymerschichten mit einem scharfen Messer in 1 mm Abstand über eine Länge von ca. 1 cm längs und quer eingeritzt wurden und die Haftung durch Aufkleben und Abziehen von Tesa ®-Film getestet wurde.

Die Beurteilung erfolgte nach einem internen Schlüssel, wobei Noten 2-4 Zwischenstufen zwischen Note 1 = perfekte Haftung und Note 5 = rückstandsfreie Enthaftung, bedeuten.

**Tabelle 1**

| Prüfergebnisse | | | |
|---|---|---|---|
| Polymer | Haftvermittlerlösung | Haftungsnote | |
| | | nach Lagerung bei Raumklima | nach zusätzlichem Kochtest |
| PAS 1 | - | 5 | 5 |
| PAS 1 | HV 1 | 1 | 2 |
| PAS 1 | HV 2 | 4 | 5 |
| PAS 1 | HV 3 | 1 | 1 |
| PAS 2 | - | 4 | 5 |
| PAS 2 | HV 1 | 3 | 3 |
| PAS 2 | HV 2 | 1 | 1 |
| PAS 2 | HV 3 | 1 | 1 |
| PAS 3 | - | 5 | 5 |
| PAS 3 | HV 1 | 3 | 4 |
| PAS 3 | HV 2 | 1 | 1 |
| PAS 3 | HV 3 | 1 | 1 |
| PI 1 | - | 5 | 5 |
| PI 1 | HV 1 | 4 | 5 |
| PI 1 | HV 2 | 1 | 3 |
| PI 1 | HV 3 | 1 | 1 |

## Patentansprüche

1. Verwendung eines Gemisches aus
5 bis 95 Gew.-% eines Azidosilans der allgemeinen Formel
N₃-R³-Si-R¹ₙ(OR²)₃₋ₙ I
worin R¹ für eine C₁-C₃-Alkyl-, eine Phenyl-, Benzyl- oder Toluylgruppe, R² für eine C₁-C₄-Alkyl-, C₂-C₄-Alkoxyalkyl-, eine Phenyl- oder Benzylgruppe, R³ für eine C₁-C₈-Alkylengruppe, welche durch ein Sauerstoffatom, Schwefelatom oder eine -(N-R⁴)-Gruppe, worin R⁴ ein Wasserstoff, eine Methyl-, Ethyl- oder Phenylgruppe bedeutet, unterbrochen sein kann, und n für 0, 1 oder 2 steht, und
5 bis 95 Gew.-% eines Aminoalkoxysilans der allgemeinen Formel
H₂N-R⁵-Si-R⁶ₘ(OR⁷)₃₋ₘ II
worin R⁵ für eine C₁-C₆-Alkylen-, eine C₅-C₆-Cycloalkylen- oder -Arylengruppe, welche zusätzlich durch ein oder zwei C₁-C₃-Alkylgruppen substituiert sein können und R⁶ und R⁷ unabhängig voneinander für eine C₁-C₆-Alkyl- oder eine C₅-C₆-Cycloalkylgruppe, welche ebenfalls zusätzlich durch ein oder zwei C₁-C₃-Alkylgruppen substituiert sein können, stehen und m = 0, 1 oder 2 sein kann,
als Haftvermittler zwischen Polykondensaten, welche als Struktureinheiten heterocyclische Ringsysteme mit N-Atomen aufweisen oder Vorstufen dieser Polykondensate und anorganischen Substraten.

2. Verwendung des Gemisches gemäß Anspruch 1 als Haftvermittler zwischen Polyimiden oder Polyamidsäuren und anorganischen Substraten.

## Claims

1. The use of a mixture of from 5 to 95% by weight of an azidosilane of the formula
N₃-R³-Si-R¹ₙ(OR²)₃₋ₙ I
where R¹ is C₁-C₃-alkyl, phenyl, benzyl or tolyl, R² is C₁-C₄-alkyl, C₂-C₄-alkoxyalkyl, phenyl or benzyl, R³ is C₁-C₈-alkylene, which may be interrupted by oxygen, sulfur or -(N-R⁴)- in which R⁴ is hydrogen, methyl, ethyl or phenyl, and n is 0, 1 or 2, and
from 5 to 95% by weight of an aminoalkoxysilane of the formula
H₂N-R⁵-Si-R⁶ₘ(OR⁷)₃₋ₘ II
where R⁵ is C₁-C₆-alkylene, C₅-C₆-cycloalkylene or C₅-C₆-arylene, each of which may be additionally substituted by one or two C₁-C₃-alkyl groups, and R⁶ and R⁷, independently of one another, are C₁-C₆-alkyl or C₅-C₆-cycloalkyl, each of which may likewise be additionally substituted by one or two C₁-C₃-alkyl groups, and m may be 0, 1 or 2,
as an adhesion promoter between polycondensates containing, as structural units, heterocyclic ring systems containing nitrogen atoms, or precursors of these polycondensates, and inorganic substrates.

2. The use of the mixture as claimed in claim 1 as an adhesion promoter between polyimides or polyamidic acids and inorganic substrates.

## Revendications

1. Utilisation, comme intermédiaire d'adhérence entre polycondensats qui présentent comme unités structures des systèmes cycliques à atomes N ou des phases préliminaires de ces polycondensats et de substances inorganiques, d'un mélange de :
- 5 à 95 % en poids d'un azidosilane de la formule générale
N₃-R³-Si-R¹n (OR²)₃-n I
où R¹ est mis pour un groupe alkyle en C1-C3, ou groupe phényle, benzyle ou toluyle
R² est mis pour un groupe alkyle en C1-C4, alcoxyalkyle en C2-C4, un groupe phényle ou benzyle,
R³ est mis pour un groupe alkylène en C1-C8 qui peut être interrompu par un atome d'oxygène, un atome de soufre ou un groupe -(N-R⁴),
R⁴ signifiant un hydrogène, un groupe méthyle, éthyle ou phényle et n est mis pour 0,1 ou 2, et
- 5 à 95 % en poids d'un aminoalcoxysilane de la formule générale
H₂N-R⁵-Si-R⁶m (OR⁷)₃-m II
où R⁵ est mis pour un groupe alkylène en C1-C6, un groupe cycloalkylène en C5-C6 ou un groupe arylène, qui peut être substitué additionnellement pour un ou deux groupes alkyle en C1-C3, et
R⁶ et R⁷ sont mis, indépendamment l'un de l'autre pour un groupe alkyle en C1-C6 ou un groupe cycloalkyle en C5-C6 qui peuvent éventuellement être, en outre, substitués par un ou deux groupes alkyle en C1-C3 et m = 0,1 ou 2.

2. Utilisation du mélange selon la revendication 1, comme intermédiaire d'adhérence entre polyimides ou polyacides-amides et substrats inorganiques.
